# FASCICULE DE BREVET EUROPEEN

(11) **EP 3 969 814 B1**
(45) Date de publication et mention de la délivrance du brevet: **09.08.2023**
(21) Numéro de dépôt: 20737512.2
(22) Date de dépôt: 14.05.2020
(51) Int. Cl.: F23R 3/50, F23R 3/60

(54) **TURBOMACHINE Â GAZ AVEC FIXATION DE CHAMBRE DE COMBUSTION**
GASTURBINENMASCHINE MIT BRENNKAMMERBEFESTIGUNG
GAS TURBOMACHINE WITH COMBUSTION CHAMBER ATTACHMENT

(30) Priorité: 14.05.2019 FR 1904986
(43) Date de publication de la demande: 23.03.2022
(73) Titulaire: SAFRAN AIRCRAFT ENGINES, 75015 Paris (FR)
(72) Inventeur: JOORY, Dan-Ranjiv, 77550 MOISSY-CRAMAYEL (FR); BUNEL, Jacques, Marcel, Arthur, 77550 MOISSY-CRAMAYEL (FR); VILLENAVE, Benjamin, Frantz, Karl, 77550 MOISSY-CRAMAYEL (FR)
(74) Mandataire: Ernest Gutmann - Yves Plasseraud S.A.S.
(86) Numéro de dépôt international: PCT/FR2020/050805
(87) Numéro de publication internationale: WO 2020/229781

(56) Documents cités:
- FR-A1- 2 465 080
- FR-B1- 3 020 865
- US-A1- 2005 016 182
- US-A1- 2016 169 513

## Description

### Domaine technique de l'invention

La présente invention concerne une turbomachine à chambre annulaire de combustion. Une turbomachine à gaz pour aéronef est particulièrement visée.

### Etat de la technique antérieure

A partir de FR3020865B, on connaît une telle turbomachine présentant un axe et comprenant un carter externe et une chambre annulaire de combustion comprenant deux viroles annulaires, respectivement interne et externe radialement par rapport à l'axe de la turbomachine. Les viroles sont disposées l'une à l'intérieur de l'autre et reliées en extrémités respectives amont par une paroi annulaire de fond de chambre. La chambre annulaire de combustion est fixée, en partie amont, à un carter externe de la turbomachine, via des broches individuellement à liaison rotulée (c'est-à-dire pourvue d'une rotule).

Dans FR3020865B, la solution au problème passe par le fait que l'extrémité amont d'au moins l'une des viroles interne et externe est centrée par appui radial sur la paroi annulaire de fond de chambre et coopère par coulissement axial à étanchéité avec celle-ci.

Mais il est ici considéré que demeurent en particulier les problèmes suivants :
- capacité à fabriquer hors contrainte excessive : usinage complexe car, par broche, une angulation non à angle droit entre une platine de fixation et la direction d'allongement de la broche peut avoir à être donnée à chaque broche à liaison rotulée, pour son positionnement opérationnel incliné par rapport à une radiale,
- difficulté à positionner correctement la chambre de combustion dans son environnement : intégration avec la bougie d'allumage dont elle est en outre équipée, les injecteurs de carburant dans la chambre de combustion et les liaisons auxdites extrémités aval des viroles (typiquement des lamelles d'étanchéité),
- maintenance : usures importantes de certaines zones des broches à liaison rotulée, ouvrant les jeux entre le carter externe et la chambre de combustion, d'où un possible décalage axial de la chambre de combustion en fonctionnement et nécessité d'un remplacement régulier des pièces,
- quasi pas de marge de manoeuvre au montage de la chambre de combustion dans la turbomachine, d'où des difficultés pratiques, y compris de précontraintes locales.

Il est précisé que, dans le présent texte, « axial » a pour sens suivant l'axe (ci-après 30 ou X, de la turbomachine), ou parallèle à lui, et radial a pour sens (sensiblement) transversal à cet axe 30 ; axe conventionnel Z. Extérieur et intérieur s'apprécient radialement.

### Résumé de l'invention

Pour apporter une solution à une partie au moins de ces problèmes, il est proposé, sur la turbomachine à gaz pour aéronef présentée ci-avant en liaison avec FR3020865 et au niveau de ladite partie amont de fixation :
- que la liaison rotulée soit établie entre la broche et une partie du carter externe dans laquelle une paroi convexe de la broche est reçue, et
- qu'une liaison coulissante est en outre établie à l'écart de la liaison rotulée, entre la broche et une partie :
   -- de la virole annulaire externe, et/ou
   -- de la paroi annulaire de fond de chambre.

Ladite liaison coulissante est présente à distance, ou autrement dit à l'écart, de la liaison rotulée : ladite liaison coulissante dont il fait état ci-avant est de préférence située à une extrémité de la broche précitée opposée à celle où est située la liaison rotulée.

Située de fait dans un espace, la liaison rotulée sera utilement établie, ou située, dans une cavité du carter externe, ou, comme ci-après détaillé, dans une pièce (tel qu'un bouchon) rapportée sur le carter externe.

Ainsi, si on compare la solution de l'invention avec l'enseignement de FR 2465080, les montages sont inverses ; dans la solution de FR 2465080 et de manière classique :
- la liaison rotulée est du côté de la virole 2 présentée dans FR 2465080, pas du côté du carter 4 de ce document, et
- il n'y a pas de liaison coulissante établie en outre (c.a.d. hors la liaison rotulée) entre la broche 9 de ce document FR 2465080 et une partie 6 de la virole annulaire externe et/ou de la paroi annulaire de fond de chambre.

Avec la solution de l'invention, on doit notamment gagner du jeu de montage et/ou du jeu opérationnel, turbomachine en fonctionnement.

Une liaison coulissante orientée pour un coulissement radial (suivant l'axe Z) est appropriée. A ce sujet, il est en fait proposé, de préférence, que ladite partie par laquelle la liaison coulissante de la broche est établie soit une partie tubulaire s'étendant radialement (axe Z), ou avec une composante radiale.

Une forme tubulaire est simple à fabriquer, et son passage (interne) peut efficacement remplir un rôle de liaison coulissante. On peut de façon simple et fiable la fixer, voire la réaliser monobloc avec la virole annulaire externe ou la paroi annulaire de fond de chambre, voire les deux (vissage(s), soudure(s)...).

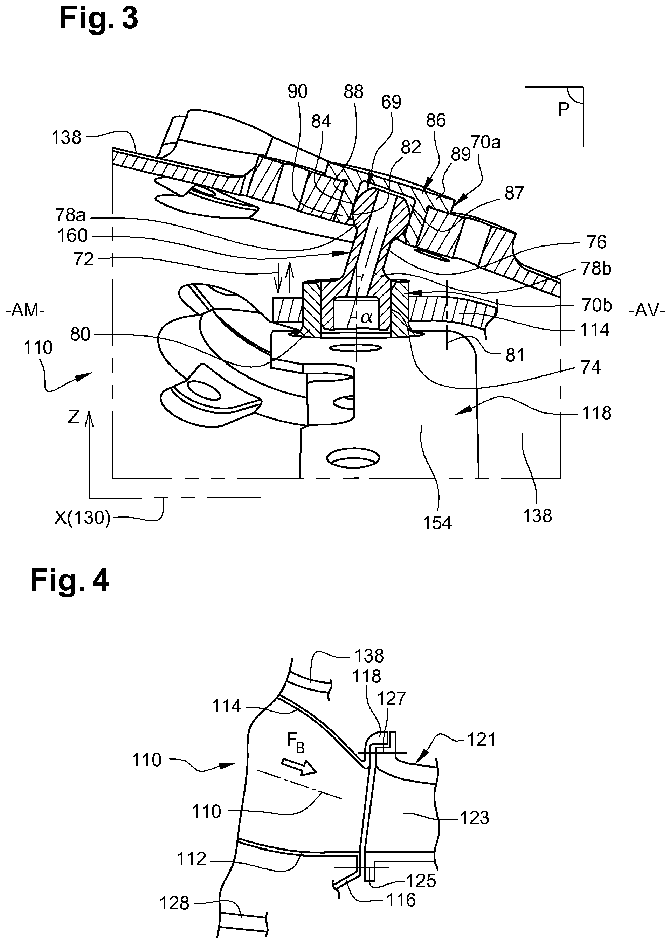

L'expression « composante radiale » a pour sens que l'élément concerné ne s'étend pas strictement radialement, mais que sa direction d'extension peut se décomposer selon les axes X et Z, comme tel est le cas pour l'angle α ci-après (orientation oblique ; cf. figure 3). Il est par ailleurs aussi proposé, de préférence :
- que chaque dite broche présente un fût entre une première extrémité où est située la liaison rotulée, établie dans ladite partie du carter externe, et une deuxième extrémité où, pour ledit possible coulissement, la broche est en contact glissant suivant un axe avec ladite partie tubulaire, et
- que le fût soit orienté obliquement par rapport à l'axe du contact glissant.

Ainsi, à l'aide d'un outillage, on pourra jouer angulairement sur le positionnement de la chambre pour contrôler les jeux (bougie d'allumage, injecteurs de carburant, liaisons auxdites extrémités aval des viroles).

Positionner la liaison rotulée à ladite première extrémité du fût - côté carter externe - permettra de limiter les jeux précités, de limiter les effets des frottements et d'optimiser les positionnements à réaliser.

On pourra préférer que l'axe du contact glissant précité soit radial, d'où une facilité de fabrication et un référentiel de positionnement plus aisé à maîtriser, donc plus opérationnel.

Il est aussi proposé que, de préférence, ladite partie avec laquelle est établi le possible coulissement radial, ou avec une composante radiale, comprenne une cheminée dressée radialement, avec le même effet que ci-dessus.

Il est aussi proposé que, de préférence, cette cheminée soit dressée radialement sur la paroi annulaire de fond de chambre.

Ainsi, en choisissant une telle partie structurelle et favorablement une zone la plus structurelle de celle-ci, on stabilisera la fixation à réaliser.

Pour favoriser les mouvements à réaliser et sa réalisation, il est encore proposé que la liaison rotulée précitée comprenne une liaison entre une paroi convexe et une paroi cylindrique.

De préférence, la paroi cylindrique sera une paroi d'un bouchon fixé au carter externe. Remplacer un tel bouchon devrait être relativement simple, et, si la liaison rotulée est située à ladite première extrémité du fût, donc côté carter externe et pas côté chambre de combustion, et que le fût de chaque dite broche est désaxé (s'étend de biais) par rapport à l'axe du contact glissant, on optimisera les montages et la possibilité, à l'aide d'un outillage, de jouer angulairement sur le positionnement de la chambre de combustion pour contrôler les jeux et la réduction des usures précitées.

A noter aussi, en liaison avec les problèmes précédemment énoncés, l'avantage lié à un montage tel qu'en dite partie amont, les broches, qui seront au moins trois, soient réparties circonférentiellement autour de la chambre de combustion et puissent individuellement, via la liaison rotulée et ledit possible coulissement, présenter une orientation angulaire différente de celle des autres, chacune par rapport à un axe radial, selon un plan passant par l'axe de la turbomachine.

L'invention pourra être mieux comprise et d'autres détails, caractéristiques et avantages de l'invention pourront apparaître à la lecture de la description suivante faite à titre d'exemple non limitatif en référence aux dessins annexés.

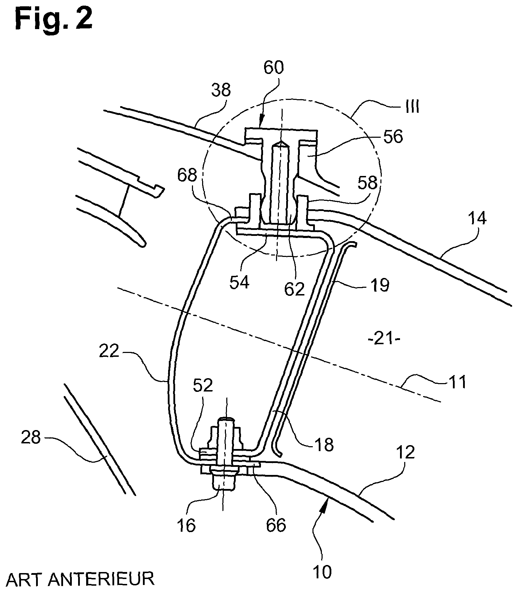

En termes d'avantages à la solution de l'invention considérée avec tout ou partie des caractéristiques qui précèdent, on notera encore :
- que la partie coulissante va diminuer les usures avec la partie tubulaire, turbomachine en fonctionnement,
- un gain de masse lié au remplacement :
   -- de ce qui est typiquement prévu dans l'art antérieur (voir figure 2 : platine digon 60 et vis),
   -- par ladite partie (repérée 86 ci-après) du carter externe avec laquelle est établie la liaison rotulée (et qui peut donc être un bouchon fileté).

### Brève description des figures

[Fig. 1] est une vue schématique en coupe médiane d'une chambre de combustion qui peut être conforme à l'invention ;
[Fig. 2] est une vue schématique en coupe d'une extrémité amont de chambre de combustion selon l'art antérieur, suivant un plan de coupe axial passant par des organes de fixation de cette extrémité amont ;
[Fig. 3] correspond, en agrandi, à la zone III de la figure 2, mais sur une chambre de combustion conforme à l'invention ;
[Fig. 4] est une vue schématique en coupe médiane comme la figure 1 d'une autre manière de fixer une chambre de combustion conforme à l'invention, en extrémité aval ; et [Fig. 5] est une vue schématique depuis l'aval en coupe médiane comme la figure 1 présentant une possible répartition circonférentielle des organes de fixation en extrémité amont de la chambre de combustion.

### Description détaillée de l'invention

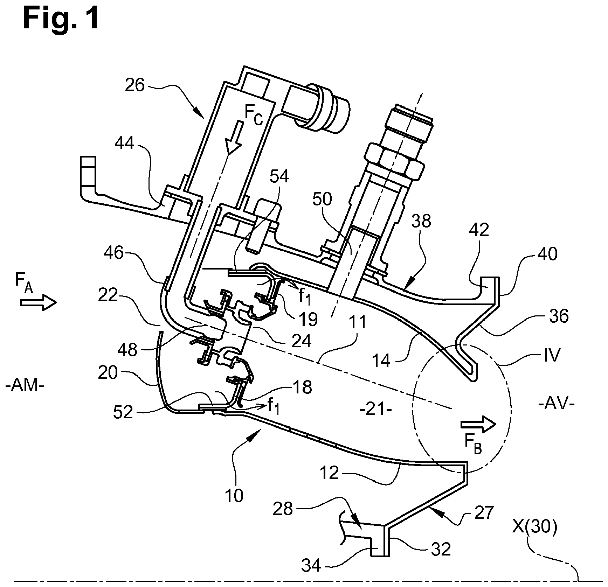

Sur la solution de l'art antérieur des figures 1-2, la chambre de combustion 10, d'axe 11 d'allongement, reçoit un flux d'air FA, de l'amont, (AM) et un flux de carburant FC. Les gaz brulés FB en sortent vers l'aval (AV), où ils sont dirigés vers une turbine, telle la turbine 121, ici haute pression (voir figure 4), et d'abord vers un distributeur 123 de turbine qui est une partie du stator de la turbomachine.

La chambre de combustion 10 comprend deux viroles annulaires coaxiales interne 12 et externe 14, fixées à leurs extrémités amont à une paroi de fond de chambre 18 annulaire, plus rigide. La paroi de fond de chambre 18 s'étend transversalement à l'axe 11. Parallèlement, juste devant elle (juste en aval), s'étend un écran thermique ou paroi pare-flamme 19. De l'air ayant traversé la paroi de fond de chambre 18 passe dans l'espace entre les parois 18-19, à fin de refroidissement, et débouche dans le volume interne 21 de la chambre 10, par un espace annulaire situé en périphérie de la paroi pare-flamme 19.

La chambre de combustion 10 comprend également un carénage annulaire 20 amont fixé (par boulonnage par exemple) sur le fond de chambre 18 et destiné à orienter le flux d'air FA en entrée, ou en contournement, de la chambre de combustion 10. La paroi de fond de chambre 18 et le carénage 20 comprennent des ouvertures 22, 24 permettant l'entrée d'air dans la chambre et l'insertion des têtes des injecteurs 26 diffusant du carburant dans la chambre de combustion 10. L'extrémité aval de la virole annulaire interne 12 est reliée à une bride annulaire 27 de fixation sur un carter interne 28 agencé radialement à l'intérieur de la virole annulaire interne 26 par rapport à l'axe 30 de la turbomachine (axe longitudinal et axe général de rotation). La bride annulaire interne 27 comprend également à son extrémité radialement interne une paroi annulaire radiale 32 fixée par boulonnage sur une paroi annulaire radiale 34 correspondante du carter interne 28. De même, l'extrémité aval de la virole annulaire externe 14 est reliée à une bride annulaire 36 de fixation sur un carter externe 38 entourant la chambre de combustion 10. L'extrémité radialement externe de la bride externe 36 comprend une paroi annulaire radiale 40 fixée par boulonnage sur une paroi annulaire radiale 42 correspondante du carter externe 38. Comme représenté en figure 1, le carter externe 38 comprend également une pluralité de bossages 44 répartis circonférentiellement autour de l'axe de la turbomachine (c'est là le sens de « circonférentiel ») et permettant chacun la fixation d'un injecteur 26 de carburant dont le bras 46 traverse le bossage 44. L'extrémité aval, ou tête, 48 de chaque injecteur se loge suivant l'axe 11 dans l'une des ouverture 22 du carénage 20 en vis-à-vis axial de l'une des ouvertures 24 du fond de chambre 18, ceci pour l'injection de carburant dans la chambre de combustion 10. Pour réaliser l'allumage du mélange air/carburant apporté, une ou plusieurs bougies 50 sont portées par le carter externe 38 et le traverse ainsi que la virole annulaire externe 14 de manière à ce que l'extrémité radialement interne de la bougie 50 affleure la face interne de la virole externe 14.

Dans l'exemple, la chambre de combustion 10 est convergente, c'est-à-dire que son axe 11 d'éjection des gaz chauds converge, vers l'aval, vers l'axe 30 de la turbomachine.

En outre, comme on le voit aussi en figure 2, qui est une solution de l'art antérieur, le fond de chambre 18 comprend deux rebords annulaires interne 52 et externe 54 coaxiaux s'étendant sensiblement axialement. Pour réaliser la fixation de l'extrémité amont de la chambre de combustion, le carter externe 38 comprend des bossages 56 régulièrement répartis sur la face externe du carter externe 38. Ces bossages 56 comprennent chacun un orifice dont l'axe est aligné radialement avec l'axe d'une ouverture d'un bossage tubulaire 58 formé sur la face externe du rebord annulaire externe 54 de la paroi annulaire de fond de chambre 18. Une broche 60 de fixation (dite aussi « platine digon ») est engagée depuis l'extérieur du carter externe 38 dans chaque ouverture du bossage 56 du carter externe et comprend une extrémité radialement interne vissée sur un filetage correspondant de la surface interne du bossage tubulaire 58. La broche 60 vient par l'extérieur en butée sur le bossage 56 lors du vissage. L'extrémité intérieure de la broche 60 de fixation présente une rotule 62. Ainsi, une liaison rotulée est établie au niveau de la virole externe 14, donc côté chambre de combustion 10, entre la broche 60 et la surface cylindrique du bossage tubulaire 58 dans lequel la rotule 62 est engagée. La virole annulaire interne 12 peut présenter des échancrures dans lesquelles sont engagés les boulons 16 de fixation du rebord annulaire interne 52 au rebord annulaire interne 66 du carénage 22. La virole externe 14 peut également comprendre des échancrures de passage des même boulons 16 de fixation du rebord annulaire externe 54 au rebord annulaire externe 68 du carénage 22.

La fixation réalisée par les broches 60 a été considérée comme posant problème, dans l'invention ; voir ci-avant ; cf. FR3020865B.

Un mode de réalisation de la solution proposée par l'invention est illustré figures 3-4.

La description effectuée en référence aux figures 1, 2 représentant une chambre de combustion s'applique toutefois à cette solution telle que proposée aux figure 3,4. Les éléments similaires, ou identiques au moins fonctionnellement, sont incrémentés d'une centaine et ne seront pas nécessairement de nouveau décrits.

On y notera que la chambre de combustion 110 annulaire dont on ne voit figure 3 que la partie correspondant à la zone III de la figure 2, est toujours fixée :
- en partie amont, au carter externe 138, via des broches 160 individuellement à liaison rotulée 69 (figure 3), et
- en partie aval (figure 4) à une partie aval de la turbomachine.

Dans cet exemple, la fixation aval s'opère via des lamelles d'étanchéité 125, 127, entre des extrémités aval des viroles annulaires interne 112 et externe 114 pourvues respectivement de brides 116,118 et d'autres brides, annulaires interne et externe respectivement, du distributeur 123, ici un distributeur haute pression. Des ressorts (non représentés) peuvent permettre de centrer le tout.

Toutefois la fixation aval de la chambre de combustion 110 pourrait aussi être faite avec le carter interne 128 et/ou le carter externe 138, comme par exemple suivant la solution présentée ci-avant en référence à la figure 1.

Quelle que soit la fixation aval retenue, c'est particulièrement la fixation amont de la chambre de combustion 110 qui est concernée par l'invention.

Ainsi, comme illustré figure 3, en partie amont et par broche 160 :
- la liaison rotulée 69 est établie entre la broche 160 et une partie 70a creuse du carter externe 138, et
- la broche 160 peut en outre coulisser radialement (flèches 72 ; axe Z), ou avec une composante radiale, par un coulissement établi entre la broche 160 et une partie tubulaire 70b de la virole annulaire externe 114 et/ou de la paroi annulaire, ou rebord, de fond de chambre 118.

La partie 70a est une partie fixe, creuse, du carter externe 138 dans la cavité interne 170 de laquelle est reçue et peut bouger la liaison rotulée, ou rotule, 69. La liaison rotulée, ou rotule, 69 peut être définie par une forme convexe, par exemple sphérique, à une première extrémité 78a d'un fût 76 présent sur la(chaque) broche 160, ladite « liaison coulissante » possible étant alors située à une deuxième extrémité 78b du fût 76.

Pour qu'on puisse jouer angulairement sur le positionnement de la chambre 110 à fins de contrôler de jeux (bougie d'allumage, injecteurs de carburant, liaisons auxdites extrémités aval des viroles...), il a été préféré que :
- chaque dite broche 160 présente un dit fût 76 entre une première extrémité 78a où est située la liaison rotulée 69 et une deuxième extrémité 78b où, pour le possible coulissement précité, la broche est alors en contact glissant suivant un axe avec ladite partie tubulaire 70b, et
- le fût 76 est orienté obliquement par rapport à l'axe du contact glissant repéré 74 figure 3 : angle α (ici à composantes sur X et Z).

L'angle α pourra être tel que 10°≤α≤ 25° par rapport à l'axe radial (Z) local.

Choisir l'axe radial Z comme axe du contact glissant 74 permettra une facilité de fabrication et un référentiel de positionnement plus aisé à maîtriser, donc plus opérationnel.

A ce sujet, le mode préféré de réalisation prévoit que ladite partie tubulaire 70b avec laquelle est établi le coulissement 74 autorisé, radial ou donc avec composante radiale, comprend une cheminée 80 dressée radialement.

Si le coulissement 74 était « à composante radiale », l'angle par rapport à l'axe Z serait inférieur à 45°, et de préférence inférieur à 30°, de préférence encore de valeur comme l'angle α, qui pourrait alors être égal à 0°, le fût 76 pouvant alors être radial.

En choisissant que la cheminée 80 soit dressée radialement sur la paroi de fond de chambre 118, donc une partie pouvant être structurelle on pourra toutefois bien stabiliser la fixation à réaliser.

La cheminée 80 pourra être soudée avec la paroi de fond de chambre 118, ou être fabriquée de façon monobloc avec elle.

Cette paroi annulaire de fond de chambre 118 est définie dans la réalisation préférée par le rebord annulaire externe 154.

En 81, on a schématisé figure 3, l'une des fixations radiales, telles que des vis radiales, qui existent entre la paroi de fond de chambre 118 et la virole annulaire externe 114 circonférentiellement.

Ainsi, que ladite partie tubulaire 70b soit fixée ou monobloc avec la virole annulaire externe 114 ou avec la paroi 154 de fond de chambre 118, voire les deux, une dite liaison coulissante 74 avec l'une impliquera une liaison coulissante avec l'autre.

En complément, il est proposé que la liaison rotulée 69 comprenne une liaison entre une paroi convexe 82 et une paroi cylindrique 84 qui est donc orientée obliquement par rapport à l'axe du contact glissant ; cf. figure 3.

Côté carter externe 138, la liaison rotulée 69 est donc formée par la paroi convexe 82 à la première extrémité 78a de la broche 160 et la paroi cylindrique 84 (d'un orifice 87) du carter externe 138, ou d'une partie fixée à lui.

Il est en effet même prévu que cette paroi cylindrique 84 puisse être une paroi d'un bouchon 86 fixé au carter externe 138, pour fermer un orifice 88 où est positionné la tête de rotule, c'est-à-dire la paroi convexe 82.

Le bouchon 86 est considéré comme une partie du carter externe 138.

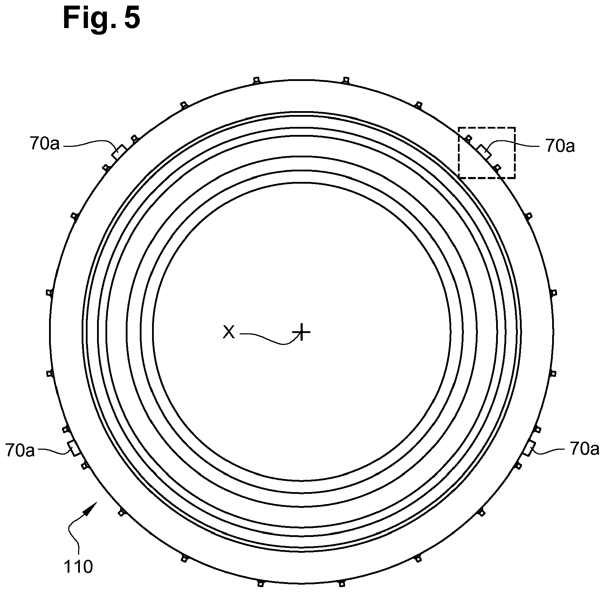

Chaque orifice 87 et la paroi cylindrique 84 qui le délimite périphériquement sont orientés obliquement (suivant l'angle α) par rapport à l'axe, de préférence radial, du contact glissant. Le bouchon 86 présente un fond plein 89 qui ferme par l'extérieur l'orifice 88 du carter externe 138 et un fût 90 qui pénètre dans l'orifice 88, lequel fût présente la paroi cylindrique 84. Avec la vue, depuis l'aval, de la chambre de combustion 110 de la figure 5, on comprend que, préférentiellement, en partie amont, les broches 160 et les parties concernées du carter externe 138 (on ne voit ici que les parties 70a), sont au moins trois (quatre dans l'exemple) et sont réparties circonférentiellement autour de la chambre de combustion 110.

Chaque broche 160 pourra ainsi, via la liaison rotulée 69 et ledit coulissement autorisé 72, présenter une orientation angulaire différente de celle des autres broches, chacune par rapport à un axe radial Z, selon un plan (repéré P figure 3) passant par l'axe (X,130) de la turbomachine, permettant de la sorte de régler au mieux la position et l'orientation de la chambre de combustion 110.

## Revendications

1. Turbomachine à gaz pour aéronef présentant un axe (X, 130) et comprenant un carter externe (138) et une chambre annulaire de combustion (110) qui comprend deux viroles annulaires, respectivement interne (112) et externe (114) radialement par rapport à l'axe (X,130) de la turbomachine, disposées l'une à l'intérieur de l'autre et reliées en extrémités amont par une paroi annulaire (154) de fond de chambre (118), la chambre annulaire de combustion (110) étant fixée, en partie amont, au carter externe (138), via des broches (160) individuellement à liaison rotulée, **caractérisée en ce qu'**en dite partie amont de la chambre annulaire de combustion (110), et par broche :
- la liaison rotulée (69) est établie entre la broche (160) et une partie (86) du carter externe (138) dans laquelle une paroi convexe (82) de la broche (160) est reçue, et
- une liaison coulissante (74) est établie, à l'écart de la liaison rotulée (69), entre la broche (160) et une partie de la virole annulaire externe (114) et/ou de la paroi annulaire (154) de fond de chambre (118).

2. Turbomachine selon la revendication 1, dans laquelle ladite partie par laquelle la liaison coulissante (74) de la broche est établie est une partie (70b) tubulaire s'étendant radialement, ou avec une composante radiale.

3. Turbomachine selon la revendication 2, dans laquelle :
- chaque dite broche (160) présente un fût (76) entre une première extrémité, où est située la liaison rotulée établie dans ladite partie (86) du carter externe (138), et une deuxième extrémité où, pour ledit possible coulissement, la broche (160) est en contact glissant, suivant un axe, avec ladite partie (70b) tubulaire, et
- le fût (76) est orienté obliquement (α) par rapport à l'axe du contact glissant.

4. Turbomachine selon la revendication 3, dans laquelle l'axe du contact glissant est radial (Z).

5. Turbomachine selon l'une quelconque des revendications précédentes, dans laquelle ladite partie avec laquelle est établi le possible coulissement radial, ou avec une composante radiale, comprend une cheminée (80) dressée radialement.

6. Turbomachine selon la revendication 5, dans laquelle la cheminée (80) est dressée radialement sur la paroi annulaire (154) de fond de chambre (118).

7. Turbomachine selon l'une quelconque des revendications précédentes, dans laquelle la liaison rotulée comprend une liaison entre ladite paroi convexe (82) et une paroi cylindrique (90).

8. Turbomachine selon la revendication 7, dans laquelle la paroi cylindrique (90) est une paroi d'un bouchon (86) fixé au carter externe (138).

9. Turbomachine selon l'une quelconque des revendications précédentes dans laquelle, en dite partie amont, les broches (160), qui sont au moins trois, sont réparties circonférentiellement autour de la chambre de combustion (110) et peuvent individuellement, via la liaison rotulée et ledit possible coulissement, présenter une orientation angulaire différente de celle des autres, chacune par rapport à un axe radial (Z), selon un plan passant par l'axe (X,130) de la turbomachine.

## Patentansprüche

1. Gasturbinen-Turbotriebwerk für Luftfahrzeuge, das eine Achse (X, 130) aufweist und ein Außengehäuse (138) und eine ringförmige Brennkammer (110) enthält, die zwei Mantelringe, nämlich einen radial in Bezug auf die Achse (X, 130) des Turbotriebwerks inneren (112) und einen äußeren (114), umfasst, die ineinander angeordnet und an ihren stromaufwärtigen Enden über eine ringförmige Wandung (154) des Kammerbodens (118) verbunden sind, wobei die ringförmige Brennkammer (110) im stromaufwärtigen Bereich über einzeln kugelgelenkig verbundene Dorne (160) am Außengehäuse (138) befestigt ist,
**dadurch gekennzeichnet, dass** im stromaufwärtigen Bereich der ringförmigen Brennkammer (110) und pro Dorn:
- die Kugelgelenkverbindung (69) zwischen dem Dorn (160) und einem Abschnitt (86) des Außengehäuses (138) ausgebildet ist, in dem eine konvexe Wandung (82) des Dorns (160) aufgenommen ist, und
- eine Gleitverbindung (74) beabstandet von der Kugelgelenkverbindung (69) zwischen dem Dorn (160) und einem Abschnitt des äußeren Mantelrings (114) und/oder der ringförmigen Wandung (154) des Kammerbodens (118) ausgebildet ist.

2. Turbotriebwerk nach Anspruch 1,
wobei der Abschnitt, über welchen die Gleitverbindung (74) des Dorns ausgebildet ist, ein rohrförmiger Abschnitt (70b) ist, der sich radial oder mit einer radialen Komponente erstreckt.

3. Turbotriebwerk nach Anspruch 2, wobei:
- jeder Dorn (160) einen Schaft (76) zwischen einem ersten Ende, an dem sich die in dem Abschnitt (86) des Außengehäuses (138) ausgebildete Kugelgelenkverbindung befindet, und einem zweiten Ende aufweist, an dem der Dorn (160) für die mögliche Gleitbewegung mit dem rohrförmigen Abschnitt (70b) in Gleitkontakt entlang einer Achse steht, und
- der Schaft (76) in Bezug auf die Achse des Gleitkontakts schräg ausgerichtet (α) ist.

4. Turbotriebwerk nach Anspruch 3,
wobei die Achse des Gleitkontakts radial (Z) verläuft.

5. Turbotriebwerk nach einem der vorhergehenden Ansprüche,
wobei der Abschnitt, mit dem die mögliche Gleitbewegung radial oder mit einer radialen Komponente erfolgt, einen radial aufgerichteten Schacht (80) umfasst.

6. Turbotriebwerk nach Anspruch 5,
wobei der Schacht (80) radial auf der ringförmigen Wandung (154) des Kammerbodens (118) aufgerichtet ist.

7. Turbotriebwerk nach einem der vorhergehenden Ansprüche,
wobei die Kugelgelenkverbindung eine Verbindung zwischen der konvexen Wandung (82) und einer zylindrischen Wandung (90) umfasst.

8. Turbotriebwerk nach Anspruch 7,
wobei die zylindrische Wandung (90) eine Wandung eines am Außengehäuse (138) befestigten Abschlussteils (86) ist.

9. Turbotriebwerk nach einem der vorhergehenden Ansprüche,
wobei im stromaufwärtigen Bereich die Dorne (160), die zumindest in einer Anzahl von drei vorliegen, in Umfangsrichtung um die Brennkammer (110) herum verteilt sind und einzeln über die Kugelgelenkverbindung und die mögliche Gleitbewegung eine andere Winkelausrichtung als die anderen aufweisen können, und zwar jeweils in Bezug auf eine radiale Achse (Z) in einer Ebene, die durch die Achse (X, 130) des Turbotriebwerks verläuft.

## Claims

1. An aircraft gas turbomachine having an axis (X, 130) and comprising an outer housing (138) and an annular combustion chamber (110) comprising two annular shrouds, respectively inner annular shroud (112) and outer annular shroud (114), radial with respect to the axis (X, 130) of the turbomachine, arranged one inside the other and connected at upstream ends by an annular wall (154) of chamber bottom (118), the annular combustion chamber (110) being fixed, at an upstream part thereof, to the outer housing (138), via pins (160) individually connected by a swivel connection,
**characterized in that**, at said upstream part of the annular combustion chamber (110), and for each pin:
- the swivel connection (69) is established between the pin (160) and a part (86) of the outer housing (138) in which a convex wall (82) of the pin (160) is received, and
- a sliding connection (74) is established, spaced from the swivel connection (69), between the pin (160) and a part of the outer annular shroud (114) and/or the annular wall (154) of the chamber bottom (118).

2. The turbomachine according to claim 1, wherein said part through which the sliding connection (74) of the pin is established is a tubular part (70b) extending radially, or with a radial component.

3. The turbomachine according to claim 2, wherein:
- each said pin (160) has a shaft (76) between a first end, where the swivel connection established in said part (86) of the outer housing (138) is located, and a second end where, for said possible sliding, the pin (160) is in sliding contact, along an axis, with said tubular part (70b), and
- the shaft (76) is obliquely oriented (α) with respect to the axis of the sliding contact.

4. The turbomachine according to claim 3, wherein the axis of the sliding contact is radial (Z).

5. The turbomachine according to any one of the preceding claims, wherein said part with which the possible radial or radial component sliding is established, comprises a radially erected chimney (80).

6. The turbomachine according to claim 5, in which the chimney (80) is erected radially on the annular wall (154) of the chamber bottom (118).

7. The turbomachine according to any of the preceding claims, wherein the swivel connection comprises a connection between said convex wall (82) and a cylindrical wall (90).

8. The turbomachine according to claim 7, wherein the cylindrical wall (90) is a wall of a plug (86) attached to the outer housing (138).

9. The turbomachine according to any one of the preceding claims in which, in said upstream part, the pins (160), which include at least three pins, are distributed circumferentially around the combustion chamber (110) and are adapted, by means of the swivel connection and the said possible sliding, to individually have an angular orientation different from that of the others, each in relation to a radial axis (Z), in a plane passing through the axis (X, 130) of the turbomachine.
